Europäisches Patentamt

European Patent Office

Office européen des brevets

(11) Publication number: **0 192 413**
**A2**

(12) **EUROPEAN PATENT APPLICATION**

(21) Application number: **86300967.6**

(22) Date of filing: **12.02.86**

(51) Int. Cl.⁴: **H 04 N 9/73**

(30) Priority: **14.02.85 JP 27420/85**

(43) Date of publication of application:
**27.08.86 Bulletin 86/35**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **Tamura, Takahiko c/o Patents Division**
**Sony Corporation 6-7-35 Kitashinagawa**
**Shinagawa-ku Tokyo 141(JP)**

(72) Inventor: **Sengoku, Yoshinari c/o Patents Division**
**Sony Corporation 6-7-35 Kitashinagawa**
**Shinagawa-ku Tokyo 141(JP)**

(74) Representative: **Thomas, Christopher Hugo et al,**
**D Young & Co 10 Staple Inn**
**London WC1V 7RD(GB)**

(54) **Colour television receivers.**

(57) In a television receiver, a colour picture tube (16) for displaying a colour picture has a signal supply that includes a plurality of primary colour signal channels for supplying a plurality of primary colour signals to the tube (16) and current detecting means (26) connected to the signal supply so as to detect currents flowing through the tube (16) and an automatic white balance circuit (23, 24, 8, 10) for controlling the signal supply in response to the detected currents detected by the current detecting means (26). A power responsive circuit (321) generates a control signal when a power switch for the television receiver is turned on and a blanking circuit (22) connected to the signal supply inhibits the supply of primary colour signals to the tube (16). A first circuit (322) connected to the power responsive circuit (321) actuates the blanking circuit (22) when the power switch is turned on, and a second circuit (323) connected to the current detecting mens (321) deactuates the blanking circuit (22) when the current which flows through the tube (16) exceeds a predetermined value.

EP 0 192 413 A2

./...

FIG. 2

## COLOUR TELEVISION RECEIVERS

This invention relates to colour television receivers having video blanking for a predetermined interval after a power switch has been turned on.

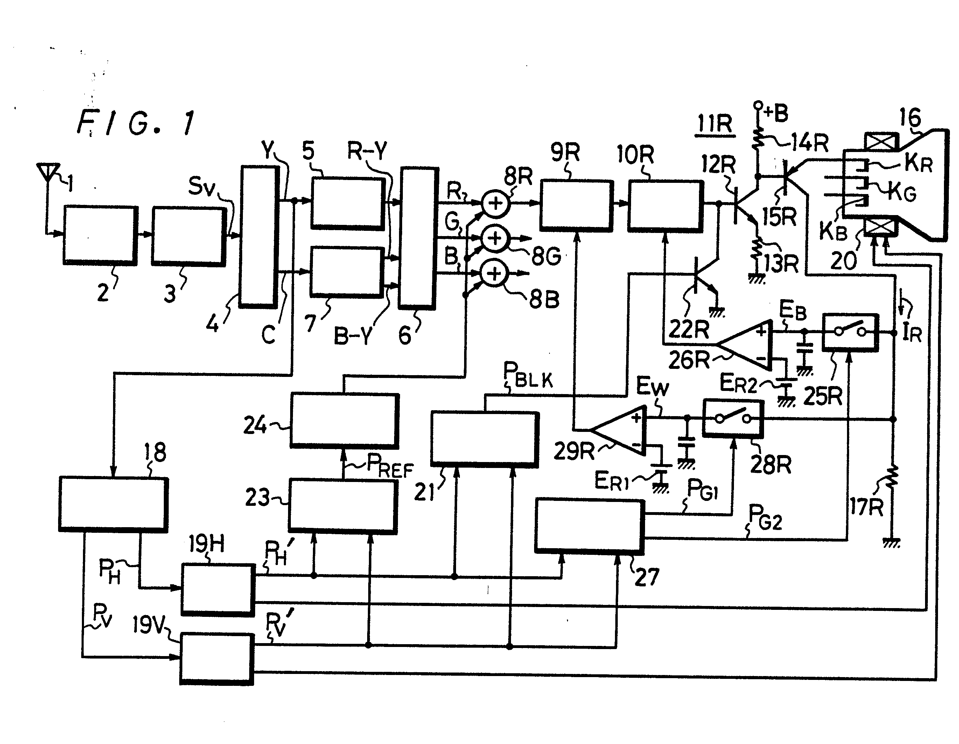

Figure 1 of the accompanying drawings is a block circuit diagram showing an example of a previously proposed television receiver wherein an antenna 1 supplies an input to a tuner circuit 2. A video detector circuit 3 receives an amplified intermediate frequency signal from the tuner 2 and supplies a composite video signal SV to a luminance signal/chrominance signal separator circuit 4.

A luminance signal Y from the separator circuit 4 is supplied through a luminance amplifier 5 to a matrix circuit 6. Also, a chrominance signal C from the separator circuit 4 is supplied to a colour demodulator circuit 7. The colour demodulator circuit 7 produces a red colour difference signal signal R-Y and a blue colour difference signal B-Y, both of which are fed to the matrix circuit 6.

The matrix circuit 6 performs the matrix resolution of the luminance signal Y and the colour difference signals R-Y and B-Y, and produces red, green and blue primary colour signals R, G and B at its output. The red primary colour signal R is supplied through an adder 8R to an amplifier 9R, and through a level shifter circuit 10R to the base of an npn-type transistor 12R which forms a video output circuit 11R.

The emitter of the transistor 12R is grounded through a resistor 13R, and the collector of transistor 12R is connected through a resistor 14R to a power supply terminal +B. The collector of the transistor 12R is also connected to the base of a pnp-type transistor 15R. The emitter of the transistor 15R is connected to a red cathode KR of the red colour gun of a three gun colour picture tube 16, and the collector of the transistor 15R is grounded through a transistor 17R.

The green primary colour signal G and the blue primary colour signal B supplied from the matrix circuit 6 are also supplied to adders 8G and 8B, respectively. Although not illustrated, circuit elements are provided between the adders 8G and 8B which correspond to those for the red primary colour signal, and are respectively connected to the green cathode KG and the blue cathode KB of the tube 16. Since these circuits are identical to the red channel, they are not shown in detail in Figure 1.

The luminance signal Y obtained from the separator circuit 4 is supplied to a sync separator circuit 18. A horizontal sync signal PH and a vertical sync signal PV obtained from the sync separator circuit 18 are supplied to a horizontal deflection circuit 19H and a vertical deflection circuit 19V, respectively. The respective deflection signals from the horizontal deflection circuit 19H and the vertical deflection circuit 19V are fed to a deflection coil 20 of the tube 16.

In the circuit arrangement described above, the cathodes KR, KG and KB of the tube 16 are driven by the red, green and blue primary colour signals R, G and B, and a colour picture is displayed on the video screen of the tube 16.

A blanking pulse generator circuit 21 for generating a horizontal blanking pulse and also a vertical blanking pulse of five to six horizontal periods receives inputs as shown. The blanking pulse generator 21 is supplied with a pulse signal PH' of the horizontal period from the horizontal deflection circuit 19H, and also a signal PV' of the vertical period from the vertical deflection circuit 19V, and an npn-type transistor 22R receives at its base a blanking pulse signal PBLK from the blanking pulse generator 21. Thus, during the period of the blanking pulse PBLK, the transistor 22R will be turned on, so that the base of the transistor 12R to which it is connected will be grounded to cause video blanking and, thus, a flyback line is prevented from appearing on the video screen. Although not illustrated, such video blanking is accomplished in the same way for the green primary colour signal path and the blue primary colour signal path.

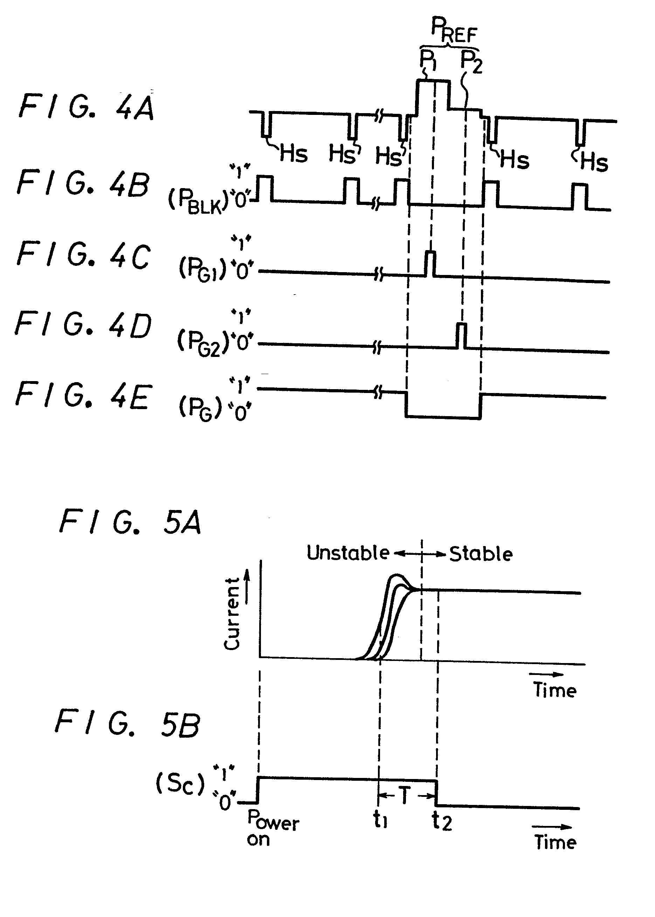

A pulse generator circuit 23 generates a reference pulse PREF that is used to adjust the white balance. The pulse generator 23 is supplied with the signals PH' and PV' from the deflection circuits 19H and 19D. The reference pulse signal PREF is formed such that its first half during one horizontal period is composed of a signal P1 having a luminance level of 60 IRE, which is used to adjust the beam current of the white level, and its second half is composed of a signal P2 having a luminance level in a range from 15 to 20 IRE which is used to adjust the beam current of the black level. The reference pulse PREF is supplied to a reference signal insertion circuit 24. and from its output to the adders 8R, 8G and 8B, and the reference pulse PREF is inserted into a predetermined horizontal period of each vertical blanking period of the primary colour signals R, G and B as illustrated in Figure 4A of the accompanying drawings. In Figure 4A, reference HS designates a horizontal sync signal, and Figure 4B of the accompanying drawings shows the blanking pulse PBLK.

The connection point between the collector of the transistor 15R and the resistor 17R is connected through a switching circuit 25R to one input terminal of an operational amplifier 26R which comprises a comparator. A gate pulse generator circuit 27 receives the signals PH' and PV' from the deflection circuits 19H and 19V. The gate pulse generator 27 generates a gate pulse PG2 illustrated in Figure 4D of the accompanying drawings which corresponds to the signal P2 position of the reference pulse PREF. The gate pulse PG2 is supplied to the switching circuit 25R to turn on the switching circuit 25R only during the period of the gate pulse PG2. A capacitor is connected between the output terminal of the switching circuit 25R and ground. This capacitor is charged during the pulse period of the gate pulse PG2, and the potential of the capacitor will be held during the period in which the switching circuit 25R is turned off. This causes the detected voltage EB corresponding to a cathode beam current IR when the signal P2 is supplied to the cathode KR to be supplied to one input terminal of the operational amplifier 26R where it is compared with a reference voltage ER2 which is supplied to the other input terminal of the operational amplifier 26R. The error signal produced at the output terminal of the operational amplifier 26R is supplied to the level shifter circuit 10R as a control signal, such that a DC level is controlled so that the cathode current IR has a predetermined black level when the signal P2 occurs, which is determined by the reference voltage ER2 in consideration of the white balance.

The connection point between the collector of the transistor 15R and the resistor 17R is also connected through a switching circuit 28R to one input terminal of an operational amplifier 29R which forms a comparator. The gate pulse generator 27 also generates a gate pulse PG1 illustrated in Figure 4C of the accompanying drawings, which corresponds to the signal P1 portion of the reference pulse PREF. The gate pulse PG1 is supplied to the switching circuit 28R so that the switching circuit 28R will be turned on only during the pulse period of the gate pulse PG1. A capacitor is connected between the output terminal of the switching circuit 28R and ground as illustrated. This capacitor is charged during the pulse period of the gate pulse PG1, and the voltage will be held during the interval in which the switching circuit 28R is turned off. Accordingly, a detected voltage EW corresponding to the cathode current IR when the signal P1 is supplied to the cathode KR is obtained. The voltage EW is supplied to one input terminal of the operational amplifier 29R and a reference voltage ER1 is supplied to the other input terminal of the operational amplifier 29R. The error signal produced at the output terminal of the operational amplifier 29R is supplied to the amplifier 9R as the control signal, so that the gain of the amplifier 9R is controlled such that the cathode current IR during the signal P1 will have a predetermined white level that is determined by the reference voltage ER1 in consideration of the white balance.

Although not illustrated, the control of the cathode beam currents for the green and blue primary colour signal systems is accomplished in the same manner as that illustrated for the cathode current for the red electron gun. Thus, in the system of Figure 1, the white balance will be automatically adjusted.

A white balance adjusting apparaus has been disclosed in Japanese patent publication no 55/67286 which discloses a system wherein when the power switch of the television receiver is turned on, an automatic control loop is cut-off and a white balance adjusting voltage is supplied from a predetermined bias source, and a predetermined time after the power switch of the television receiver has been turned on, the automatic control loop is operated. However, in the system described in Japanese patent publication no 55/67286 since the picture is already displayed on the picture screen of the television receiver before the automatic white balance (AWB) loop is stabilised, and when the automatic control loop is changed from an inoperable condition to the operable condition, a transition condition on the picture screen is inevitable, so that the displayed picture becomes unstable, as in the example described above.

According to the present invention there is provided a colour television receiver comprising:

a colour picture tube for displaying a colour picture thereon;

signal supply means including a plurality of primary colour signal channels for supplying a plurality of primary colour signals to said colour picture tube;

current detecting means connected to said signal supply means for detecting currents flowing through said colour picture tube; and

an automatic white balance circuit for controlling said signal supplying means in response to the detected currents of said current detecting means; characterised by:

a power responsive circuit for generating a control signal when a power switch of the television receiver is turned on;

a blanking circuit connected to said signal supply means for inhibiting the supplying of said primary colour signals to said colour picture tube when activated;

first means connected to said power responsive circuit for activating said blanking circuit when said power switch is turned on; and

second means connected to said power responsive circuit for deactivating said blanking circuit when said current flowing through said colour picture tube exceeds a predetermined value.

According to the present invention there is also provided a colour television receiver comprising:

a three gun colour picture tube for displaying a colour picture;

means for receiving and separating three colour drive signals for said colour picture tube;

a power on-off switch for supplying power to said television receiver; characterised by:

a switching circuit;

a blanking circuit connected to turn off said three colour drive signals for a time after said power on-off switch has been turned on, and connected to said switching circuit to receive a blanking signal;

current detecting means connected to said colour picture tube to detect current therein;

a control signal generator connected to said current detecting means and supplying a control signal to said switching circuit and producing a blanking command signal for a time after said power switch has been turned on, and producing a blanking off signal when the power switch has been turned on for a time sufficient for said current detecting means to detect sufficient levels of current in all of the three guns of said colour picture tube.

Embodiments of the present invention provide a colour television receivers having an AWB adjusting circuit in which the video blanking signal is carried out during a predetermined interval after a power switch of the television receiver has been turned on, so that when the television receiver is initially powered, an unstable picture due to instability of the AWB adjusting circuit will be prevented from appearing on the picture screen of the television receiver.

Accordingly, such an embodiment can solve the following problems of the circuit of Figure 1, for example. In such previously proposed circuits, when the power switch of the television receiver is turned on, the following problems occur.

1.     Since the heater for a cathode electrode of the display tube is cold when the television receiver is turned on, the video circuit is controlled so as to be in a condition to cause the cathode beam current to flow at a maximum value. Thus, when the heater is heated sufficiently, and the cathode emission begins, the video screen becomes too bright during a transient time until the AWB circuit becomes stabilised.

2.     Since the cut-off voltage EKCO of the display tube is scattered between the red colour, the green colour and the blue colour cathodes, the AWB circuit will be stabilized after different times for red, green and blue, and the colour of the picture will fluctuate. Figure 5A of the accompanying drawings illustrates an example of variations of the cathode currents for the red, green and blue colours, after the power switch of the television receiver has been switched on.

These problems can be overcome by such embodiments because the video blanking occurs until the AWB circuits for the red, green and blue colours have become stabilised, after the power switch of the television receiver has been turned on. Specifically, when the power switch of the television receiver is turned on, the video blanking is carried out, and after a predetermined time when all of the cathode currents of the picture tube have reached a value which is higher than a predetermined value, the video blanking is made inoperative, so an unstable picture will be prevented from being displayed on the picture screen of the television receiver.

The invention will now be described by way of example with reference to the accompanying drawings, throughout which like parts are referred to by like references, and in which:

Figure 1 is a block diagram of a previously proposed automatic white balance adjusting system;

Figure 2 is a block diagram of an embodiment of the invention;

Figure 3 is a detailed electrical schematic view of a control signal generator illustrated in Figure 2; and

Figures 4A to 3E and Figures 5A and 5B are graphs for explaining the operation.

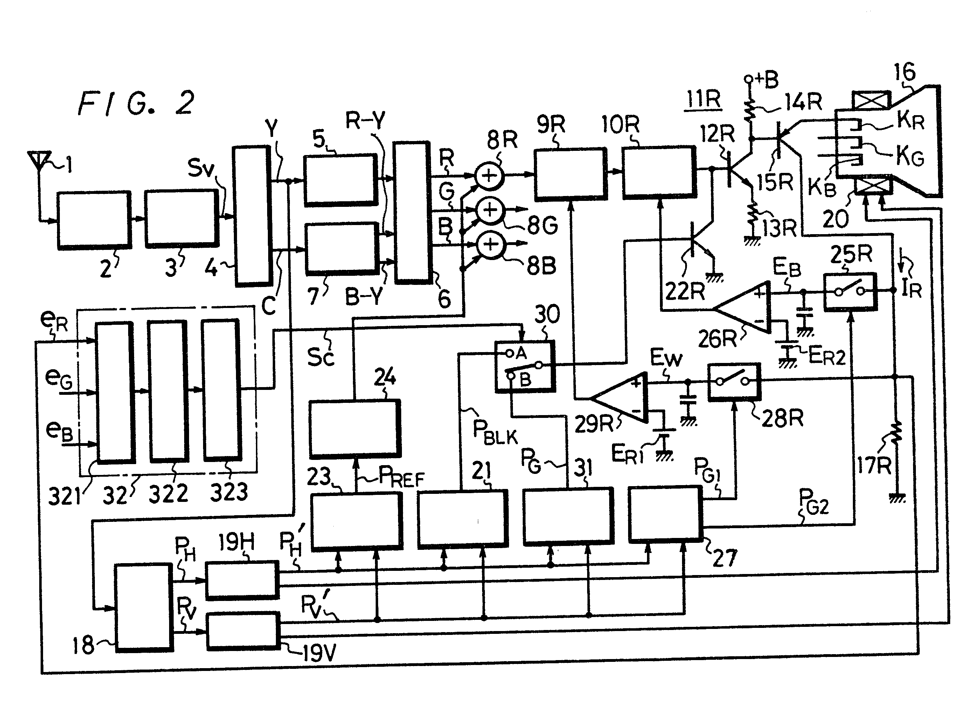

An embodiment of the present invention is illustrated in Figure 2, in which those parts which correspond to those in Figure 1 are identified with the same references, and will not be described in detail.

As shown in Figure 2, the blanking pulse PBLK from the blanking pulse generator 21 is supplied to a fixed terminal A of a switching circuit 30. A gate pulse generator circuit 31 which is supplied with the signals PH' and PV' from the deflection circuits 19H and 19G and produces a gate pulse PG illustrated in Figure 4E, which has a low level "0" only during the period of the reference pulse PREF from the pulse generator 23. The gate pulse PG is supplied to a fixed terminal B of the switching circuit 30. The signal from the switching circuit 30 is fed to the base of the transistor 22R.

The switching circuit 30 is controlled by a switching control signal SC from a switching control signal generator circuit 32. The control signal SC is a signal illustrated in Figure 5B which has a high level "1" when the power switch of the television receiver is turned on and becomes low level "0" a predetermined time later, when each and every one of the cathode currents of the picture tube 16 has reached a value which is higher than a predetermined value. The movable contact of the switching circuit 30 is connected to the terminal A when the control signal SC has low value "0", and the movable contact is connected to the terminal B when the signal SC has high level "1".

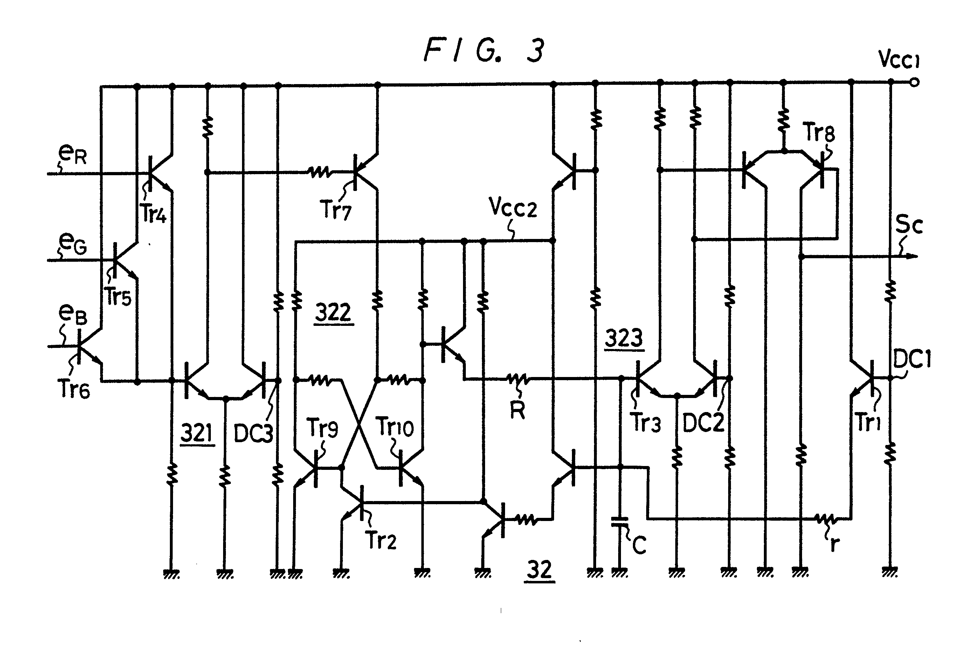

The control signal generator 32 comprises a current detection circuit 321, a flip-flop circuit 322 and a delay circuit 323, and is formed as illustrated in Figure 3.

As shown in Figure 3, a transistor Tr4 is supplied with a signal eR which is developed at the connection point between the collector of the transistor 15R and the resistor 17R illustrated in Figure 2, and the signal eR corresponds to the magnitude of the cathode current IR corresponding to the red colour.

Also, signals eG and eB corresponding respectively to the magnitude of the cathode currents for the green and blue colours are fed to transistors Tr5 and Tr6, respectively, as illustrated in Figure 3.

At the instant the power switch of the television receiver is turned on, a voltage DC1 is supplied to a transistor Tr1 to turn it on, and a transistor Tr2 is turned on through a line which carries a voltage VCC2 for a predetermined time period determined by the time constant of a resistor R and a capacitor C. Thus, when the power switch of the television receiver is turned on, the transistor Tr2 causes the flip-flop 322 to go into the reset condition such that transistors Tr9 and Tr10 are turned on and off, respectively. At that time, the base voltage of the transistor Tr3 increases to a voltage equal to DC1 - VBE (VBE is the base emitter voltage of the transistor). The circuit is designed to satisfy the condition that DC2 is greater than DC1. Thus, a transistor Tr3 is made non-conductive, and a transistor Tr8 is made conductive. Consequently, when the power switch of the television receiver is turned on, the collector voltage of the transistor Tr8 is changed from low level "0" to high level "1".

At a time t1 illustrated in Figure 5B, when the cathode current begins to flow, and any one of the signals eR, eG and eB become larger than a voltage DC3, a transistor Tr7 will be turned on and the flip-flop 322 will invert its state and become in a set condition where the transistor Tr9 is turned on and the transistor Tr10 is turned off. At that time, the transistor Tr3 is turned on after a predetermined time from the time t1, because of the time constant determined by the resistor R and the capacitor C, and at the same time the transistor Tr8 will be turned off. Thus, the collector voltage of the transistor Tr8 will change from high level "1" to low level "0" at a time t2, a predetermined time T from time t1. The predetermined time T is selected such that the AWB circuits for the red, green and blue colour signals are all stabilised by the time t2, and the time T is selected to be, for example, about two to three seconds.

Consequently, in the switching control signal generator 32, the control signal SC illustrated in Figure 5B is generated from the collector of the transistor Tr8.

In the circuit arrangement of Figure 2, the switching circuit 30 is connected to the terminal B during a period in which the control signal SC has high level "1" or in other words, until the time t2 when the AWB circuits for the red, green and blue colours are all stabilised after the power switch of the television receiver has been turned on. Therefore, during this period, the gate pulse PG from the gate pulse generator 31 will be supplied to the base of the transistor 22R, so that the transistor 22R is turned off only during the period of the reference pulse PREF, and is turned on during other periods. Thus, although the AWB circuits continue their operation, the video blanking is performed during that period. On the other hand, after the time t2, the control signal SC will have low level "0", so that the switching circuit 30 changes in position to the fixed terminal A. As a result, since the blanking pulse PBLK from the blanking pulse generator 21 is supplied to the base of the transistor 22R, the circuit of Figure 2 can operate in the same manner as the example of Figure 1.

Although not shown, the signals from the switching circuit 30 are also supplied to the bases of the transistors which are used for video blanking for the green and blue colour signal systems and the video blankings are carried out until the time t2.

Thus, since the video blanking is effected until the time t2 when the AWB circuits for the red, green and blue primary colour signals have been stabilised, it is possible to avoid an unstable picture from being displayed on the picture screen. Moreover, the blanking of the colour signals after turn-on is accurately controlled, because the currents of the cathodes are detected and the timing is selected to be correct. Thus, correct and positive control is established.

0192413

## CLAIMS

1.    A colour television receiver comprising:

a colour picture tube (16) for displaying a colour picture thereon;

signal supply means (1 to 15) including a plurality of primary colour signal channels (R, G, B) for supplying a plurality of primary colour signals to said colour picture tube (16);

current detecting means (26) connected to said signal supply means (1 to 15) for detecting currents flowing through said colour picture tube (16); and

an automatic white balance circuit (23, 24, 8, 10) for controlling said signal supplying means (1 to 15) in response to the detected currents of said current detecting means (26);

characterised by:

a power responsive circuit (321) for generating a control signal when a power switch of the television receiver is turned on;

a blanking circuit (21, 30, 22) connected to said signal supply means (1 to 15) for inhibiting the supply of said primary colour signals to said colour picture tube (16) when activated;

first means (322) connected to said power responsive circuit (321) for activating said blanking circuit (21, 30, 22) when said power switch is turned on; and

second means (323) connected to said power responsive circuit (321) for deactivating said blanking circuit (21, 30, 22) when said current flowing through said colour picture tube (16) exceeds a predetermined value.

2.    A television receiver according to claim 1 wherein said first and second means (322, 323) includes a flip-flop circuit (322) and a delay circuit (323) having a predetermined delay time, said flip-flop circuit (322) being triggered to one state by an output signal of said power responsive circuit (321) and being triggered to the other state by an output signal of said current detecting means (Tr7).

3.    A television receiver according to claim 3 wherein said delay circuit (323) includes an R-C time constant circuit and a level detector.

4.     A colour television receiver comprising:

a three gun colour picture tube (16) for displaying a colour picture;

means (1 to 15) for receiving and separating three colour drive signals for said colour picture tube (16);

a power on-off switch for supplying power to said television receiver;

characterised by:

a switching circuit (30);

a blanking circuit (22) connected to turn off said three colour drive signals for a time after said power on-off switch has been turned on, and connected to said switching circuit (30) to receive a blanking signal;

current detecting means (321) connected to said colour picture tube (16) to detect current therein;

a control signal generator (322) connected to said current detecting means (321) and supplying a control signal to said switching circuit (30) and producing a blanking command signal for a time after said power switch has been turned on, and producing a blanking off signal when the power switch has been turned on for a time sufficient for said current detecting means (321) to detect sufficient levels of current in all of the three guns of said colour picture tube (16).


5.     A colour television receiver according to claim 4 wherein said control signal generator includes a flip-flop (322) which is controlled to change condition by a composite signal from all three guns from said current detecting means (321).

FIG. 1

1/4

0192413

*F I G. 2*

FIG. 3

FIG. 4A

FIG. 4B (P$_{BLK}$)

FIG. 4C (P$_{G1}$)

FIG. 4D (P$_{G2}$)

FIG. 4E (P$_G$)

FIG. 5A

FIG. 5B